# DEMANDE DE BREVET EUROPEEN

(11) **EP 0 700 194 A1**
(43) Date de publication de la demande: **06.03.1996**
(21) Numéro de dépôt: 95401967.5
(22) Date de dépôt: 28.08.1995
(51) Int. Cl.: H04M 17/02, G07F 7/10, H04M 1/00

(54) **Dispositif téléphonique pour l'utilisation d'une pluralité de cartes à mémoire**

(30) Priorité: 30.08.1994 FR 9410436
(71) Demandeur: INFO TELECOM, F-67550 Vendenheim (FR)
(72) Inventeur: Saad, Sami, F-67000 Strasbourg (FR); Faveaux, Patrick, F-67450 Lampertheim (FR)
(74) Mandataire: Casalonga, Axel

(57) **Abrégé**

Un boîtier, comportant un ensemble téléphonique (30) possédant un bloc de traitement téléphonique (35), est connecté entre une interface-ligne, un combiné téléphonique et un clavier téléphonique (37). Un lecteur de carte à mémoire (42) relié au bloc de traitement téléphonique, est apte, en présence d'une carte à mémoire (17) introduite dans le lecteur, à délivrer un signal de présence de carte. Au moins un module spécifique (14-1, 14-2, 14-3) est fixé de façon amovible sur le boîtier de façon à être connecté au lecteur de carte et au bloc de traitement téléphonique. Il est inactivé en l'absence de carte dans le lecteur, et comportent un identifiant associé de façon biunivoque à un type prédéterminé de carte à mémoire ainsi qu'une unité de traitement (60) comportant des moyens de traitement spécifiques correspondant au type de carte à mémoire associé à l'identifiant, et des moyens de contrôle, activables en présence du signal de présence de carte, pour lire le code-carte, comparer ledit identifiant avec le code-carte lu et délivrer un premier signal prédéterminé de comparaison en cas de discordance ou activer les moyens de traitement spécifiques en cas de concordance. L'ensemble téléphonique (30) est fonction-nellement autonome en l'absence d'un couple carte-module, tandis qu'il est temporellement commandé par l'unité de traitement (60) du module spécifique en présence d'un tel couple.

## Description

L'invention concerne un dispositif téléphonique.

Elle s'applique plus particulièrement, mais non exclusivement, au télépaiement par carte bancaire à domicile.

Le télépaiement actuel, utilisable par le grand public, prévoit, dans la majorité des cas, une simple communication du numéro de carte bancaire à un serveur téléphonique, soit de façon vocale par l'intermédiaire d'un poste téléphonique, soit par l'intermédiaire du clavier d'un terminal spécifique raccordé à la ligne téléphonique, tel que le "minitel" (marque déposée). Or, un tel télépaiement ne garantit pas une sécurité absolue puisque la seule connaissance du numéro de carte bancaire permet de régler un achat.

On connaît déjà des terminaux spécifiques, dits "Terminaux Point de Vente", utilisables chez les commerçants et permettant de vérifier le code confidentiel tapé par l'utilisateur en le comparant à celui contenu dans la carte bancaire de façon à pouvoir valider la transaction. Cependant, non seulement il s'avère inconcevable d'installer un Terminal Point de Vente au domicile de chaque particulier, mais encore le logiciel de traitement incorporé au sein de ces terminaux est spécifiquement dédié au paiement par carte bancaire à puce.

Or, il existe actuellement d'autres types de carte à mémoire, tels que des cartes téléphoniques qui peuvent être utilisées dans des cabines publiques équipées d'un logiciel spécifique permettant de débiter les unités téléphoniques dans la mémoire de la carte.

Par ailleurs, le développement de la télématique permet d'envisager de plus en plus d'applications de paiement à domicile, par exemple le paiement des jeux de loterie, le paiement d'achats effectués dans un grand magasin, et ce par l'utilisation de différents types de cartes à mémoire spécifiquement dédiées à ces genres d'applications.

Or, s'il s'avère inconcevable d'installer au domicile de chaque particulier, un Terminal Point de Vente dédié spécifiquement au paiement par carte bancaire à puce, il apparaît encore plus difficile de pouvoir adapter, aisément et à moindre coût, à ces terminaux point de vente, les différents logiciels spécifiquement associés aux différents types de carte à mémoire envisagés.

L'invention vise à apporter une solution à ces problèmes.

L'invention a pour but d'utiliser un moyen de communication extrêmement répandu pour effectuer différentes transactions à partir d'une carte à mémoire pouvant être choisie parmi différents types de carte à mémoire et notamment de façon sécurisée dans le cas d'un télépaiement à domicile avec une carte bancaire à puce.

L'invention propose donc un dispositif téléphonique comprenant :
- un boîtier comportant un ensemble téléphonique possédant un bloc de traitement téléphonique connecté entre une interface-ligne, un combiné téléphonique et un clavier téléphonique, ainsi qu'un lecteur de carte à mémoire relié au bloc de traitement téléphonique et apte, en présence d'une carte à mémoire introduite dans le lecteur et contenant dans sa mémoire un code-carte représentatif du type de la carte, à délivrer un signal de présence de carte, et
- au moins un module spécifique, fixé de façon amovible sur le boîtier de façon à être connecté au lecteur de carte et au bloc de traitement téléphonique, inactivé en l'absence de carte dans le lecteur, et comportant un identifiant associé de façon biunivoque à un type prédéterminé de carte à mémoire ainsi qu'une unité de traitement comportant des moyens de traitement spécifiques correspondant au type de carte à mémoire associé à l'identifiant, et des moyens de contrôle, activables en présence du signal de présence de carte, pour lire dans la mémoire de la carte le code-carte, comparer ledit identifiant avec le code-carte lu et délivrer un premier signal prédéterminé de comparaison en cas de discordance, ou activer les moyens de traitement spécifiques en cas de concordance.

Par ailleurs, l'ensemble téléphonique est fonctionnellement autonome en l'absence d'un couple carte-module, tandis qu'il est temporellement commandé par l'unité de traitement du module spécifique en présence d'un tel couple.

Alors que le téléphone, qui est le moyen de communication actuellement le plus répandu, paraissait a priori complètement inadapté aussi bien à un télépaiement sécurisé qu'à une diversité de télépaiements différents, l'invention propose au contraire de combiner un ensemble téléphonique, un lecteur de carte à mémoire et au moins un module spécifique amovible contenant notamment le logiciel de traitement spécifique associé à chaque type de carte à mémoire. L'invention permet ainsi de s'affranchir d'un téléchargement du logiciel d'application spécifique à chaque type de carte à mémoire, lorsque un type prédéterminé doit être utilisé.

Au sens de l'invention, un module spécifique, même éventuellement électriquement alimenté par exemple lorsque le combiné téléphonique est décroché, est dit inactivé lorsqu'il est fonctionnellement inopérant vis-à-vis des autres éléments du dispositif. Ce caractère fonctionnellement inopérant s'applique également à des moyens de traitement spécifiques inactivés.

Par ailleurs, la délivrance d'un premier signal prédéterminé de comparaison doit être prise dans son sens le plus large. n peut s'agir ici de la délivrance effective d'un signal prédéterminé ou bien de la non émission d'un signal d'acquittement par exemple.

Enfin, selon l'invention, la notion d'une commande temporelle de l'ensemble téléphonique par le module, si elle prévoit à des instants choisis (en fonction de l'application) le contrôle direct du microcontrôleur de l'ensemble téléphonique, notamment dans le cas d'une application de télépaiement bancaire, n'exclut pas une autonomie fonctionnelle de l'ensemble téléphonique sur des durées contrôlées par le module.

Lorsque le bloc de traitement téléphonique, le lecteur de carte et l'unité de traitement du module spécifique sont par exemple reliés ensemble par un bus autorisant une configuration multi-maîtres, l'autonomie fonctionnelle de l'ensemble téléphonique, en l'absence d'un couple carte-module, peut s'interpréter par le fait que le bloc de traitement téléphonique "prend la main" sur le bus, c'est-à-dire devient "maître", alors que les autres éléments du dispositif sont"esclaves". Par contre, lorsqu'il y a concordance entre l'identifiant du module et le code-carte lu, l'unité de traitement du module devient alors "maître" sur le bus tandis que le bloc de traitement téléphonique est "esclave", ce qui permet à l'unité de traitement du module spécifique de gérer l'ensemble téléphonique.

Dans le cas notamment d'un mode de réalisation prévoyant l'utilisation d'un bus autorisant une configuration multi-maîtres, un moyen activé s'analyse comme un moyen prenant la main sur le bus.

Selon un mode de réalisation de l'invention, les moyens de contrôle de l'unité de traitement du module sont activés lors de la présence du signal de présence de carte sur le bus multi-maîtres.

Il est avantageusement prévu que le dispositif comporte des moyens d'indication d'anomalie, par exemple un écran alpha numérique ou bien un ou plusieurs voyants lumineux, actionnables à partir du premier signal de comparaison émis par les moyens de contrôle du module spécifique connecté au boîtier.

Le bloc de traitement téléphonique de l'ensemble téléphonique peut comporter des moyens d'interruption, commandables, aptes à interrompre la connexion entre le clavier et la ligne téléphonique. Ainsi, selon l'application envisagée, les moyens de traitement spécifiques peuvent actionner les moyens d'interruption en présence d'une condition prédéterminée. C'est notamment le cas lors d'un télépaiement par carte bancaire, lorsque l'utilisateur est invité à taper son code confidentiel sur le clavier de l'ensemble téléphonique. L'interruption de la connexion entre le clavier et la ligne téléphonique, qui doit s'entendre dans un sens très large, peut se comprendre ici comme non pas une coupure de la ligne téléphonique au sens premier du terme, mais comme une non transmission sur la ligne téléphonique, de l'écho de la touche appuyée sur le clavier. Ces moyens d'interruption peuvent être ainsi réalisés de façon logicielle au sein du bloc de traitement téléphonique du boîtier.

Le dispositif comprend avantageusement une pluralité de modules spécifiques fixés de façon amovible, directement ou indirectement, sur le boîtier. ns comportent respectivement des identifiants différents associés respectivement à des types de carte différents, et sont tous connectés au lecteur de carte et au bloc de traitement téléphonique. Les moyens de contrôle respectifs des modules comparent successivement leur identifiants avec le code-carte lu, jusqu'à l'obtention d'une concordance entre l'un des identifiants et le code-carte, ou jusqu'à la délivrance par les moyens de contrôle du dernier module de la chaîne, du premier signal prédéterminé de comparaison.

Lorsque le lecteur de carte et les modules sont connectés en parallèle sur un bus multi-maîtres, et que les unités de traitement des modules de la chaîne possédent respectivement des adresses dont les valeurs suivent une évolution monotone, par exemple des adresses croissantes ou décroissantes, de façon à former une chaîne ordonnée de modules, le signal de présence de carte est alors avantageusement accompagné sur le bus multi-maîtres de l'adresse du premier module de la chaîne de façon à activer les moyens de contrôle de ce premier module. En cas de discordance entre l'identifiant d'un module courant de la chaîne et le code-carte lu, le premier signal de comparaison émis par les moyens de contrôle dudit module courant sur le bus multi-maîtres comporte alors l'adresse du module de rang suivant dans la chaîne de façon à activer les moyens de contrôler de ce module suivant. Le premier signal de comparaison est alors éventuellement émis par les moyens de contrôle du dernier module de la chaîne de façon à actionner les moyens d'anomalie et signaler ainsi à l'utilisateur qu'aucun module spécifique correspond au type de carte insérée dans le lecteur.

L'invention permet ainsi de laisser connectés sur le boîtier du dispositif téléphonique, plusieurs modules différents associés à différents types de carte-mémoire. L'insertion d'un type de carte à mémoire sélectionne automatiquement (s'il est présent dans la chaîne), le module spécifique permettant d'activer les moyens de traitement spécifiques associés à ce type de carte de façon à piloter l'ensemble téléphonique.

D'une façon générale, le boîtier comprend avantageusement une zone d'introduction de module comportant un connecteur d'un premier type, par exemple un connecteur femelle, relié au lecteur de carte et au bloc de traitement téléphonique, ainsi que des moyens de guidage coopérant avec le corps du module, tandis que le module comporte en outre un connecteur d'un deuxième type, par exemple mâle, complémentaire du premier type, destiné à venir se fixer dans le connecteur du premier type.

Alors qu'il serait possible d'envisager plusieurs sortes d'interconnexions mutuelles entre les différents modules de la chaîne et les autres éléments du dispositif selon l'invention, par exemple une connexion individuelle de tous les modules sur un connecteur femelle du boîtier, de grande dimension, il peut également être prévu que chaque module comporte en outre un connecteur du premier type, le connecteur du deuxième type d'un module courant de la chaîne s'emboîtant dans le connecteur du premier type du module précédent.

L'invention a également pour objet un module, destiné à être fixé de façon amovible sur un boîtier contenant un ensemble téléphonique, comprenant un identifiant associé de façon biunivoque à un type prédéterminé de carte à mémoire ainsi qu'une unité de traitement comportant des moyens de traitement spécifiques correspondant au type de carte à mémoire associé à l'identifiant, et des moyens de contrôle, activables en présence d'un signal d'activation prédéterminé pour lire un code-carte d'une carte à mémoire, comparer ledit identifiant avec ledit code-carte et délivrer un premier signal de comparaison en cas de discordance ou activer les moyens de traitement spécifiques en cas de concordance.

Le fait que les moyens de contrôle lisent le code-carte dans la mémoire de la carte permet d'utiliser des lecteurs de carte à mémoire classiques non équipés d'un tel logiciel de lecture.

D'autres avantages et caractéristiques de l'invention apparaîtront à l'examen de la description détaillée d'un mode de réalisation nullement limitatif illustré sur les dessins annexés sur lesquels :
- la figure 1 représente une vue partielle très schématique d'un dispositif selon l'invention,
- la figure 2 représente une coupe schématique partielle du dispositif de la figure 1 représentant la connexion des modules avec le boîtier,
- la figure 3 est un synoptique schématique d'un ensemble téléphonique du dispositif de la figure 1,
- la figure 4 représente schématiquement la connexion de différents éléments du dispositif selon l'invention, et
- la figure 5 illustre schématiquement l'architecture interne d'un module spécifique.

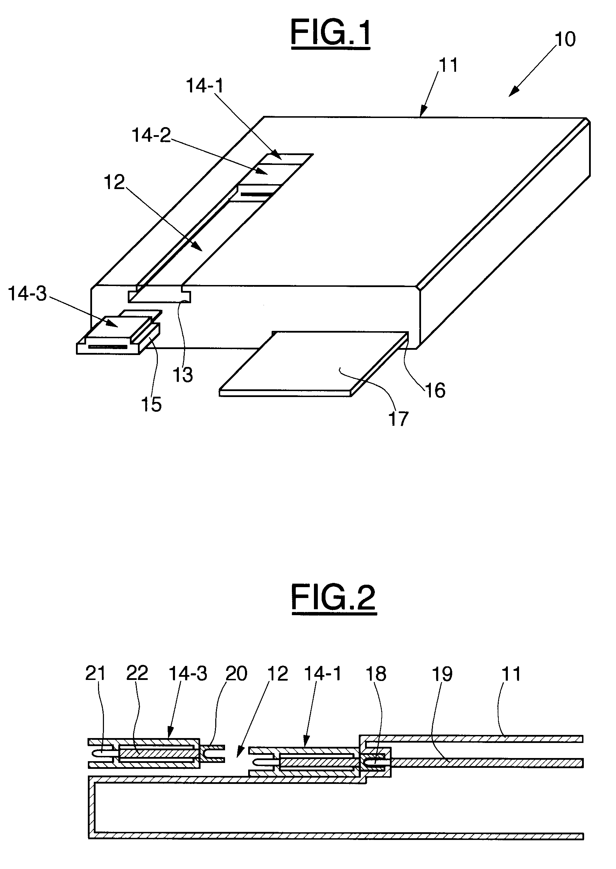

Tel qu'illustré sur la figure 1, le dispositif téléphonique 10 comprend un boîtier 11 équipé d'un ensemble téléphonique (non représenté sur cette figure à des fins de simplification) possédant notamment un combiné téléphonique et un clavier téléphonique.

Par ailleurs, sur une de ses faces, le boîtier 11 possède une rainure 12 équipée sur ses deux bords longitudinaux de deux glissières 13 pour recevoir un ou plusieurs modules 14-1, 14-2, 14-3. Dans le mode de réalisation représenté sur cette figure 1, le corps de chaque module 14-i est pourvu de deux nervures latérales 15 aptes à coopérer avec les glissières 13 de la rainure 12.

Le boîtier 11 comporte par ailleurs une ouverture 16, capable de recevoir une carte à mémoire 17, telle que par exemple une carte à puce.

Comme illustré sur la figure 2, le boîtier 11 est équipé, au bout de la rainure 12, d'un connecteur femelle 18, électriquement relié à un circuit imprimé 19 disposé à l'intérieur du boîtier. De même, chaque module 14-i est équipé à une extrémité de son corps d'un connecteur mâle 20 destiné à venir s'emboîter dans le connecteur femelle 18. Ce connecteur mâle 20 est électriquement relié à un circuit imprimé 22 interne au module et se situe, dans le mode de réalisation illustré sur cette figure, à l'opposé d'un connecteur femelle 21 également relié au circuit imprimé 22. Ce connecteur femelle 21 est destiné à recevoir le connecteur mâle 20 d'un autre module. Il est ainsi possible d'emboîter les uns dans le autres les différents modules de façon à former une chaîne.

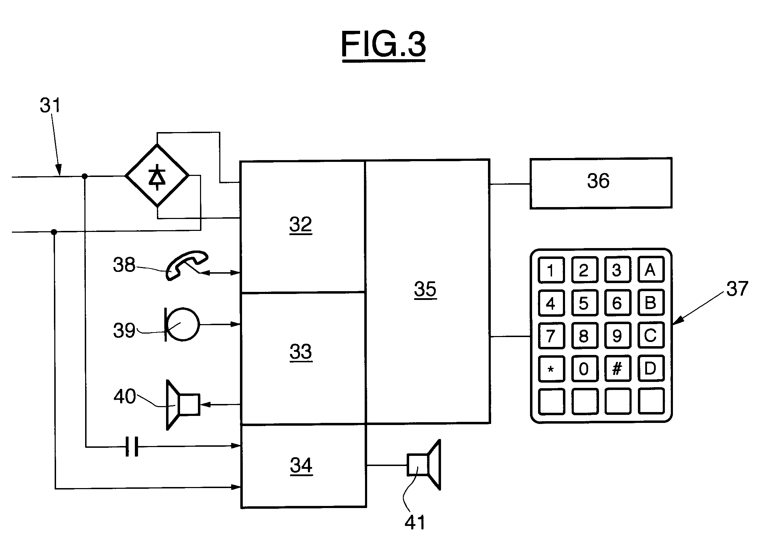

Fonctionnellement, comme illustré sur la figure 3, l'ensemble téléphonique 30 du dispositif comporte les circuits classiques d'un téléphone à clavier, par exemple alpha numérique, dans lequel l'actionnement d'une touche du clavier se traduit par la transmission sur la ligne téléphonique d'un code composé de deux fréquences (code DTMF : "DUAL TONE MULTIPLE FREQUENCY").

Plus précisément, le bloc de traitement téléphonique de l'ensemble téléphonique comporte un micro-contrôleur 35 destiné à effectuer le codage des fréquence DTMF. Ce micro-contrôleur 35 est relié d'une part au clavier alpha numérique 37 et éventuellement à un afficheur 36 à cristaux liquides.

Ce micro-contrôleur 35 est par ailleurs relié à la ligne téléphonique 31 et à un combiné téléphonique 38 par l'intermédiaire d'une interface téléphonique 32. Il est également prévu un circuit 33 d'amplification des signaux sonores disposés entre le micro-contrôleur 35 et une interface utilisateur composée d'un microphone 39 et d'un haut-parleur 40. Enfin, un détecteur de sonnerie 34 est disposé entre la ligne téléphonique 31 et un haut-parleur 41.

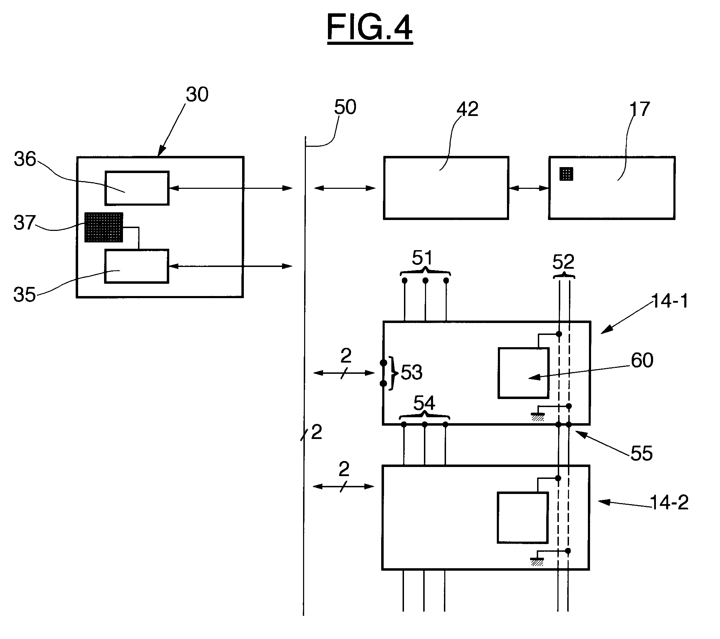

Outre l'ensemble téléphonique 30, le boîtier incorpore (figure 4) un lecteur de carte à mémoire 42 capable de coopérer avec une carte à puce par exemple, pour délivrer notamment des signaux électriques spécifiques en vu d'un protocole de dialogue, tel que celui défini par la norme européenne EN 27816. A titre d'exemple, le lecteur de carte 42 peut comporter un circuit d'interface tel que celui commercialisé par la Société PHILIPS SEMICONDUCTORS sous la référence TDA 8000. Ce circuit d'interface est disposé entre le connecteur de réception de la carte à puce 17 et un circuit de conversion parallèle/série tel que celui commercialisé par la société française RTC sous la référence PCF 8574. Le lecteur de cartes 42 est alors capable de dialoguer, sous la forme d'une liaison série, avec un bus de donnée série 50 sur lequel il est raccordé.

Bien qu'il soit possible d'effectuer une connexion série entre les différents éléments du dispositif selon l'invention, il a été actuellement jugé préférable, notamment pour des raisons de minimisation du nombre de connexions entre les différents modules, d'adopter une architecture parallèle pour le dispositif selon l'invention. En d'autres termes le micro-contrôleur 35 de l'ensemble téléphonique, l'éventuel afficheur à cristaux liquides 36, le lecteur de carte 42 et le ou les modules spécifiques 14-i sont connectés en parallèle sur le bus 50.

Dans le cas présent, le bus 50 est un bus autorisant une configuration multi-maîtres et comportant deux lignes bidirectionnelles l'une pour les signaux de données et l'autre pour les signaux d'horloge. Un tel bus est par exemple celui connu par l'homme du métier sous la dénomination IC ("Inter Integrated Circuits").

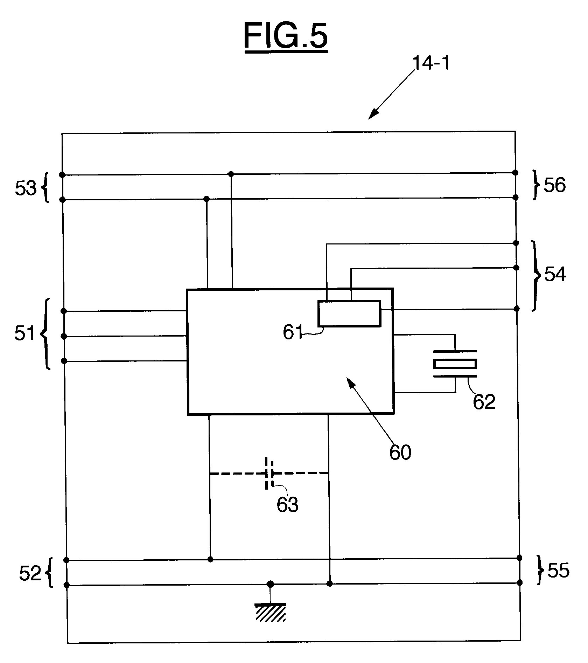

L'architecture interne d'un module 14-1 (par exemple) comporte essentiellement un micro-contrôleur 60, par exemple un micro-contrôleur 8 bits tel que celui commercialisé par la société THOMSON sous la référence ST63 (figure 5). Sur la gauche de la figure, sont représentées les bornes du connecteur mâle 20 du module. La référence 53 désigne les deux bornes d'entrée du bus 50 tandis que la référence 51 désigne les bornes recevant les adresses de chaque module et sont reliées au port d'entrée du microcontrôleur 60. Les bornes 52 sont les deux bornes d'alimentation du module.

La partie droite de la figure 5 représente les bornes du connecteur femelle 21 du module. Plus précisément, les deux bornes 56, reliées directement aux bornes 53 par deux liaisons électriques, délivrent les informations présentes sur le bus 50. Les bornes 54 reliées aux bornes de sortie du microcontrôleur 60 délivrent, comme on le verra plus en détail ci-après, au module suivant son information d'adresse calculée par le microcontrôleur 60 à partir de l'adresse reçue sur les bornes 51. Enfin, les deux bornes d'alimentation de sortie 55, reliées directement aux deux bornes 52, permettent l'alimentation du module suivant. Matériellement, le microcontrôleur 60 relié au bus 50 interne au module, est cadencé par un signal d'horloge délivré par un quartz 62. Il comprend par ailleurs une mémoire morte (non représentée ici à des fins de simplification) contenant un logiciel d'application spécifique à un type prédéterminé de carte à mémoire. Lorsque les moyens de contrôle du microcontrôleur activent le logiciel présent dans la mémoire morte, l'ensemble de ces moyens forme alors des moyens de traitement spécifiques d'une application donnée.

Alors que d'une façon générale, le microcontrôleur est alimenté directement par la ligne téléphonique par l'intermédiaire des "fils" d'alimentation internes du module, il est possible de prévoir une alimentation séparée, telle qu'une pile au lithium 63, notamment dans le cas où le logiciel d'application prévoit l'écriture de données dans une mémoire vive (RAM).

Enfin, le module possède un identifiant, par exemple un code-carte prédéterminé, stocké dans la mémoire du microcontrôleur, correspondant au logiciel d'application spécifique du module, et donc associé de façon biunivoque à un type prédéterminé de carte à mémoire.

On va maintenant décrire en détail le fonctionnement du dispositif selon l'invention en supposant que plusieurs modules 14-1... 14-3 sont emboîtés les uns dans les autres de façon à former une chaîne. Chaque élément du dispositif connecté sur le bus 50 possède une adresse, par exemple codée de 0 à 8 en binaire. On peut ainsi par exemple affecter une adresse 0 au premier module de la chaîne c'est-à-dire à celui dont le connecteur mâle est relié au correcteur femelle 18 du boîtier. Dans ce cas, matériellement, les trois bornes d'entrée 51 du premier module (quel que soit le logiciel d'application de ce premier module) seront par exemple reliées à la masse par l'intermédiaire du connecteur du boîtier. Le microcontrôleur 60 d'un module fixe alors de façon logicielle l'adresse du module suivant dans la chaîne. En pratique, l'adresse du module suivant immédiatement le module courant de la chaîne, possède une adresse qui diffère par un bit, de l'adresse du module courant. n suffit donc de prévoir un incrémenteur logique 61 sur les "fils d'adresses", ce qui peut être réalisé de façon logicielle au sein du microcontrôleur. Un tel mode de réalisation permet d'incrémenter de 1 l'adresse de chaque module de la chaîne de façon à obtenir une connexion ordonnée des modules dans ladite chaîne.

Lorsque l'utilisateur décide par exemple d'utiliser son dispositif téléphonique pour contacter un serveur vocal et pratiquer un télépaiement à l'aide de sa carte bancaire, il décroche le combiné téléphonique ce qui alimente, par l'intermédiaire de la ligne téléphonique, tous les éléments du dispositif, y compris tous les modules raccordés au boîtier. Par logiciel interne, le microcontrôleur de l'ensemble téléphonique prend la main sur le bus 50 de façon à effectuer une phase d'initialisation prédéterminée et permettre la numérotation d'appel du serveur.

Lorsque la connexion téléphonique est établie entre le poste de l'utilisateur et le serveur, et en présence d'une carte à mémoire introduite dans le lecteur de carte, ce dernier, prend la main sur le bus et diffuse sur celui-ci un signal de présence de carte et l'adresse du premier module connecté au boîtier, en l'espèce l'adresse 000.

Les moyens de contrôle du premier module sont alors activés, c'est-à-dire prennent la main sur le bus pour lire le code-carte dans la mémoire de la carte et comparer le code-carte avec l'identifiant du module stocké en mémoire.

En cas de concordance entre le code-carte et l'identifiant, c'est-à-dire si le type de carte à mémoire (en l'espèce la carte bancaire à puce) correspond au logiciel d'application spécifique du paiement par carte bancaire, l'unité de traitement du module garde la main sur le bus et les moyens de traitement spécifiques au télépaiement par carte bancaire sont activés. A partir de ce moment-là, le module, "maître" sur le bus, pilote le microcontrôleur de l'ensemble téléphonique.

Lors d'une application de télépaiement par carte bancaire notamment, il est avantageusement prévu que le dispositif comporte des moyens d'interruption de la connexion entre le clavier alphanumérique 37 et la ligne téléphonique 31. Ces moyens d'interruption peuvent être avantageusement réalisés de façon logicielle au sein du microcontrôleur 35 de l'ensemble téléphonique. Fonctionnellement, ces moyens d'interruption peuvent consister à ne pas transmettre sur la ligne téléphonique le code DTMF associé à l'actionnement de la touche correspondante sur le clavier alpha-numérique et à substituer à ce code, un code prédéterminé, par exemple le code zéro. Ces moyens d'interruption sont commandés par les moyens de traitement spécifiques du module de télépaiement. Ainsi, lorsque l'utilisateur est invité à taper son code confidentiel sur le clavier alpha numérique 37 du dispositif, les moyens de traitement spécifiques du module actionnent les moyens d'interruption de façon à ne transmettre sur la ligne téléphonique qu'une succession de codes "zéro" quel que soit le code confidentiel tapé par l'utilisateur. La confidentialité est alors assurée. Après vérification du code confidentiel par les moyens de traitement spécifiques, un signal de validation peut être alors transmis au serveur afin de valider la transaction effectuée.

En cas de discordance entre le code-carte lu et l'identifiant du premier module de la chaîne, les moyens de contrôle de celui-ci délivrent d'une façon générale un premier signal de comparaison représentatif de cette discordance. A cet effet, les moyens de contrôle du premier module 14-1 peuvent rediffuser sur le bus 50 le code-carte ainsi que l'adresse (en l'espèce l'adresse 001) du module suivant. Ce code-carte accompagné de cette nouvelle adresse permet d'activer les moyens de contrôle du module suivant afin de procéder à la comparaison entre le code-carte et l'identifiant de ce module. En variante, le premier module peut ne transmettre que l'adresse du module suivant, ce dernier prenant alors la main sur le bus pour lire le code-carte dans la mémoire de la carte. L'opération se répète éventuellement jusqu'au dernier module de la chaîne. En cas de non concordance entre le code-carte et l'identifiant de ce dernier module, le premier signal de comparaison peut alors consister en un signal spécifique actionnant l'afficheur 36 ou bien un voyant lumineux si l'afficheur n'existe pas afin d'indiquer une anomalie à l'utilisateur. Le premier signal de comparaison peut également consister en la non émission sur le bus 50 d'un signal d'acquittement, en l'absence duquel, après un temps prédéterminé, le lecteur de carte actionne les moyens d'indication d'anomalie.

Bien entendu, l'utilisateur peut utiliser le dispositif téléphonique comme un téléphone classique en l'absence d'un couple carte-module.

Outre l'application du paiement à domicile par carte bancaire, l'invention permet notamment par l'insertion d'une carte téléphonique et la connexion du module correspondant, de téléphoner depuis un poste installé chez un particulier tout en débitant, non pas le compte du particulier, mais directement la carte téléphonique.

La possibilité de connecter un ou plusieurs modules sur le poste téléphonique, en fonction du nombre de cartes à mémoire de types différents que l'on possède, offre une grande souplesse d'utilisation, notamment par la sélection automatique du module correspondant au type de carte inséré (et ce quel que soit l'ordre de connexion des modules puisque leur rang dans la chaîne est déterminé automatiquement). L'invention évite ainsi tout téléchargement de logiciel en cas de changement d'application, puisqu'il suffit de se procurer et de connecter le module correspondant à un type d'application souhaitée.

## Revendications

1. Dispositif téléphonique, caractérisé par le fait qu'il comprend :
- un boîtier (11) comportant un ensemble téléphonique (30) possédant un bloc de traitement téléphonique (35) connecté entre une interface-ligne, un combiné téléphonique (38) et un clavier téléphonique (37), ainsi qu'un lecteur de carte à mémoire (42) relié au bloc de traitement téléphonique et apte, en présence d'une carte à mémoire (17) introduite dans le lecteur et contenant dans sa mémoire un code-carte représentatif du type de la carte, à délivrer un signal de présence de carte, et
- au moins un module spécifique (14-1, 14-2, 14-3), fixé de façon amovible sur le boîtier (11) de façon à être connecté au lecteur de carte et au bloc de traitement téléphonique, inactivé en l'absence de carte dans le lecteur, et comportant un identifiant associé de façon biunivoque à un type prédéterminé de carte à mémoire ainsi qu'une unité de traitement (60) comportant des moyens de traitement spécifiques correspondant au type de carte à mémoire associé à l'identifiant, et des moyens de contrôle, activables en présence du signal de présence de carte, pour lire dans la mémoire de la carte le code-carte, comparer ledit identifiant avec le code-carte lu et délivrer un premier signal prédéterminé de comparaison en cas de discordance ou activer les moyens de traitement spécifiques en cas de concordance,
et par le fait que l'ensemble téléphonique (30) est fonctionnellement autonome en l'absence d'un couple carte-module, tandis qu'il est temporellement commandé par l'unité de traitement (60) du module spécifique en présence d'un tel couple.

2. Dispositif selon la revendication 1, caractérisé par le fait que le bloc de traitement téléphonique (35), le lecteur de carte (42) et l'unité de traitement (60) du module sont reliés ensemble par un bus (50) autorisant une configuration multi-maîtres, et par le fait qu'en cas de concordance entre l'identifiant du module et le code-carte lu, l'unité de traitement du module (60) devient maître sur le bus (50) tandis que le bloc de traitement téléphonique (35) est esclave.

3. Dispositif selon la revendication 2, caractérisé par le fait que les moyens de contrôle de l'unité de traitement (60) du module sont activés lors de la présence du signal de présence de carte sur le bus multi-maîtres.

4. Dispositif selon l'une des revendications 1 à 3, caractérisé par le fait qu'il comporte des moyens d'indication d'anomalie (36), actionnables à partir du premier signal de comparaison.

5. Dispositif selon l'une des revendications précédentes, caractérisé par le fait que le bloc de traitement téléphonique (36) de l'ensemble téléphonique (30) comporte des moyens d'interruption, commandables, aptes à interrompre la connexion entre le clavier (37) et la ligne téléphonique (31), et par le fait que les moyens de traitement spécifiques actionnent les moyens d'interruption en présence d'une condition prédéterminée.

6. Dispositif selon l'une des revendications précédentes, caractérisé par le fait qu'il comporte une pluralité de modules spécifiques (14-1,...14-3) fixés de façon amovible sur le boîtier, directement ou indirectement, comportant respectivement des identifiants différents associés respectivement à des types de carte différents, et tous connectés au lecteur de carte et au bloc de traitement téléphonique,
et par le fait que les moyens de contrôle respectifs des modules comparent successivement leur identifiant avec le code-carte lu, jusqu'à l'obtention d'une concordance entre l'un des identifiants et le code-carte lu, ou jusqu'à la délivrance par les moyens de contrôle du dernier module du premier signal prédéterminé de comparaison.

7. Dispositif selon les revendications 2, 4 et 6 prises en combinaison, caractérisé par le fait que le lecteur de carte et les modules sont connectés en parallèle sur le bus multi-maîtres (50),
par le fait que les unités de traitement des modules de la chaîne possèdent respectivement des adresses dont les valeurs suivent une évolution monotone (000, 001,...) de façon à former une chaîne ordonnée de modules,
par le fait que le signal de présence de carte est accompagné sur le bus multi-maîtres de l'adresse du premier module de la chaîne de façon à activer les moyens de contrôle de ce premier module (14-1),
par le fait qu'en cas de discordance entre l'identifiant d'un module courant de la chaîne et le code-carte lu, le premier signal de comparaison émis par les moyens de contrôle dudit module courant sur le bus multi-maîtres comporte l'adresse du module de rang suivant dans la chaîne de façon à activer les moyens de contrôle de ce module suivant, le premier signal de comparaison émis par les moyens de contrôle du dernier module de la chaîne actionnant les moyens d'anomalie (36).

8. Dispositif selon l'une des revendications précédentes, caractérisé par le fait que le boîtier comprend une zone d'introduction de module (12) comportant un connecteur d'un premier type (18) relié au lecteur de carte et au bloc de traitement téléphonique ainsi que des moyens de guidage (13) coopérant avec le corps (15) du module, le module comportant en outre un connecteur d'un deuxième type complémentaire du premier (20), destiné à venir se fixer dans le connecteur du boîtier.

9. Dispositif selon la revendication 8, caractérisé par le fait que chaque module comporte en outre un connecteur d'un premier type (21), le connecteur du deuxième type d'un module courant de la chaîne s'emboîtant dans le connecteur du premier type du module précédent.

10. Module, destiné à être fixé de façon amovible sur un boîtier contenant un ensemble téléphonique, comprenant un identifiant associé de façon biunivoque à un type prédéterminé de carte à mémoire ainsi qu'une unité de traitement comportant des moyens de traitement spécifiques correspondant au type de carte à mémoire associé à l'identifiant, et des moyens de contrôle, activables en présence d'un signal d'activation prédéterminé pour lire un code-carte d'une carte à mémoire, comparer ledit identifiant avec ledit code-carte et délivrer un premier signal de comparaison en cas de discordance ou activer les moyens de traitement spécifiques en cas de concordance.

11. Module selon la revendication 10, caractérisé par le fait qu'il comporte un connecteur apte à recevoir le connecteur correspondant d'un autre module de façon à former une chaîne de modules.

12. Module selon la revendication 11, caractérisé par le fait que, en cas de discordance entre le code-carte et l'identifiant du module, l'unité de traitement du module est apte à activer les moyens de contrôle du module suivant dans la chaîne.
